# EUROPEAN PATENT SPECIFICATION

(11) **EP 2 648 269 B1**
(45) Date of publication and mention of the grant of the patent: **30.12.2015**
(21) Application number: 13161654.2
(22) Date of filing: 28.03.2013
(51) Int. Cl.: H01M 10/42, H01M 10/48, H01M 10/615, H01M 10/6571, H01M 10/617, H01M 10/627, H01M 10/658, H01M 8/04

(54) **Device for batteries, storage batteries, cells and the like, for emergency lighting appliances**
Vorrichtung für Batterien, Speicherbatterien, Zellen und dergleichen, für Notbeleuchtungsanwendungen
Dispositif pour des batteries, accumulateurs, cellules et analogues, pour appareils d'éclairage d'urgence

(30) Priority: 03.04.2012 IT BO20120176
(43) Date of publication of application: 09.10.2013
(73) Proprietor: Schneider Electric Industrie Italia S.p.A., 02100 Rieti, Località Vazia (IT)
(72) Inventor: Gaiani, Davide, 44042 Cento FE (IT)
(74) Representative: Modiano, Micaela Nadia

(56) References cited:
- JP-A- 2 253 571
- US-A1- 2008 226 969

## Description

The present invention relates to a device for batteries, storage batteries, cells and the like, particularly for emergency lighting appliances.

In the field of emergency lighting, in particular conditions of use, it is sometimes necessary to heat or preheat the batteries.

In fact, if the appliance is arranged in an environment that is not heated, the temperature, if excessively low, can cause malfunctions of the batteries and even result in the freezing of the electrolytes contained in the battery cells, thus stopping their operation.

Devices are known which are capable of heating the batteries using high-power electric resistors.

Such devices however have the limitation of only partially heating the battery i.e. only the portion thereof which is in direct contact with the resistor.

Moreover, the temperatures reached by such devices are not applicable in the field of emergency electrical lighting, where legal requirements are more restrictive.

In fact there are specific standards to be met and more precisely CEI EN 60598-1 (general prescriptions for lighting appliances that incorporate light sources operating with power supply voltages up to 1000 V; in particular all aspects of electrical, thermal and mechanical safety), CEI EN 60598-2-22 (prescriptions for emergency lighting appliances that use light sources in emergency circuits with power supply voltages not higher than 1000 V, a specific standard for the field of emergency lamps) and IEC60623 (prescriptions for open nickel-cadmium prismatic rechargeable cells, a specific standard for rechargeable storage batteries).

Such standards establish that the operating temperature of the batteries installed in an emergency light must necessarily be comprised between 0°C and +50°C.

Conventional devices, non being adapted to constantly ensure the maintenance of an operating temperature comprised within such range, do not comply with the specifications of the above standards for emergency lighting appliances.

US2008/0226969 discloses a battery pack assembly with an integrated heater. The present invention relates to an emergency light appliance according to claim 1 and to the corresponding management method according to claim 8.

The aim of the present invention is to solve the above mentioned drawbacks, by providing a device for batteries, storage batteries, cells and the like, particularly for emergency lighting appliances, which enables the management of the appliance according to applicable statutory provisions.

Within this aim, an object of the invention is to provide a device for batteries, storage batteries, cells and the like, particularly for emergency lighting appliances, which allows the adjustment of the temperature of the battery.

A further object of the invention is to provide a device for batteries, storage batteries, cells and the like, particularly for emergency lighting appliances, which is adapted to heat a battery homogeneously.

Another object of the present invention is to provide a device for batteries, storage batteries, cells and the like, particularly for emergency lighting appliances, which is low cost, easily and practically implemented and safely applied and maintained.

This aim, these objects and others that will become more apparent hereinafter, are achieved by a device for batteries, storage batteries, cells and the like, particularly for emergency lighting appliances, **characterized in that** it comprises at least one flexible sheet, designed to cover the outer surface of a battery, comprising at least one layer which is constituted at least partially by a material that has a predefined value of electrical resistivity, and at least one temperature adjustment unit, for opening/closing the electric power supply circuit of said at least one layer, in the closed configuration of said power supply circuit, said at least one layer being heated by the Joule effect with consequent heating of the battery.

Further characteristics and advantages of the invention will become better apparent from the detailed description that follows of a preferred, but not exclusive, embodiment of the device for batteries, storage batteries, cells and the like, particularly for emergency lighting appliances, according to the invention, which is illustrated by way of non-limiting example in the accompanying drawings wherein:

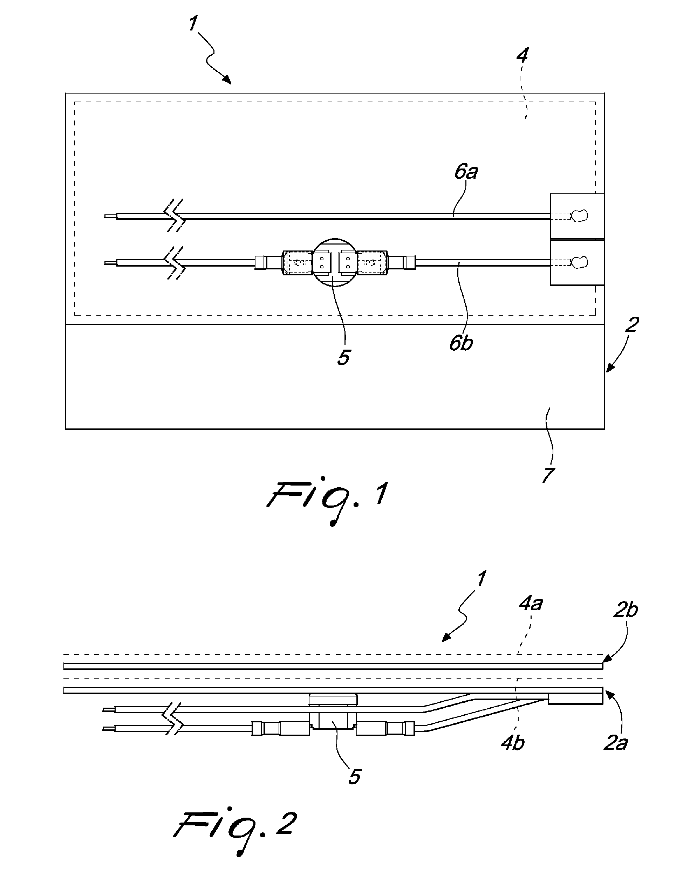

Figure 1 is a front elevation view of the device, according to the invention;
Figure 2 is a view from above of the device, according to the invention;

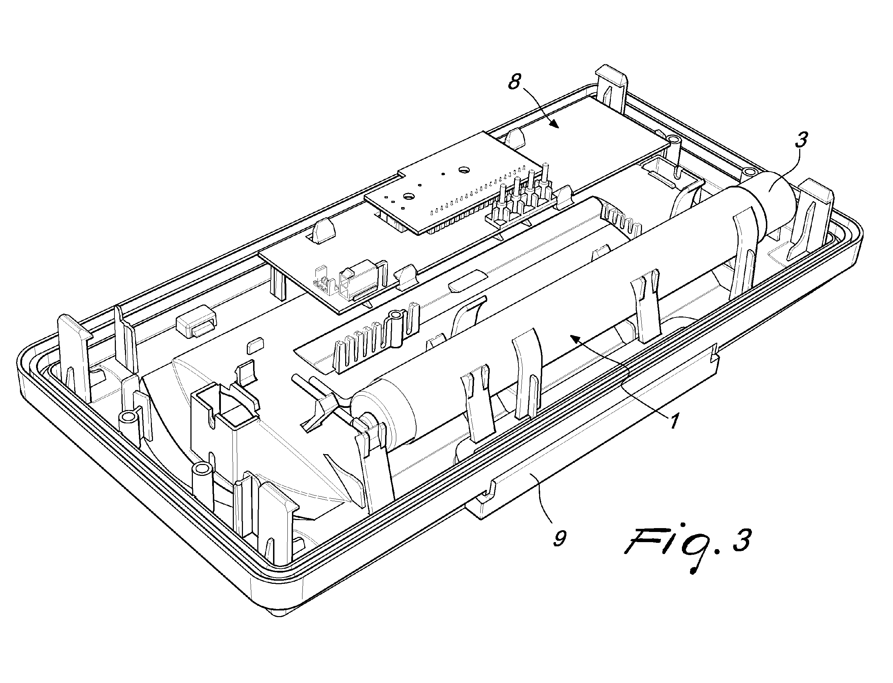

Figure 3 is a view of the device, according to the invention, in a condition of use.

With reference to the figures, the reference numeral 1 generally designates a device for batteries, storage batteries, cells and the like, particularly for emergency lighting appliances.

According to the invention, the device 1 comprises at least one flexible sheet 2, which is designed to cover the outer surface of a battery 3.

Such flexibility ensures that the sheet 2 can wrap around the battery 3, so that it is substantially in direct contact with the outer surface thereof.

The sheet 2 comprises at least one layer 4 which is constituted at least partially by a material that has a predefined value of electrical resistivity (the property of a material to offer resistance to the passage of electrical loads).

Moreover the sheet 2 comprises at least one temperature adjustment unit 5, for the opening/closing of the electric power supply circuit of the layer 4.

Such temperature adjustment unit 5 is generally arranged on the outer surface of the sheet 2.

More specifically, in the closed configuration of the power supply circuit, the layer 4 is heated by the Joule effect with consequent heating of the battery 3.

In physics, the Joule effect, also known as Joule's law or thermal effect, is a phenomenon whereby a conductor passed through by an electric current disperses energy in the form of heat as a function of the intensity of the electric current that passes through it.

The device 1 comprises two mutually coupled sheets 2a and 2b which are provided with a respective layer 4a and 4b.

The presence of the two sheets 2a and 2b thus ensures a higher quantity of total heat generated and transmitted to the battery 3.

Generally, the two sheets 2a and 2b are glued to each other.

The sheet 2 is provided with at least one pair of electrical cables 6a and 6b.

The cable 6a is arranged between the sheet 2 and the mains voltage (typically 230V), and the other cable 6b is connected to the temperature adjustment unit 5.

The temperature adjustment unit 5 is of the type preferably selected from among an electric thermostat, an electronic thermostat and the like.

The sheet 2 is provided, in one of its portions, with a coating 7 of adhesive material in order to stably fix the the sheet 2 to the battery 3.

The layer 4 is of the type preferably selected from the group consisting of a metal, a polymer with the addition of electrically conducting materials, and the like.

The sheet 2 is made of a material preferably selected from the group consisting of polymeric materials, composite materials and the like.

In a preferred embodiment the sheet 2 is made of material of the type of Kapton®, i.e. a polyimide film capable of offering high levels of performance in terms of resistance to high temperatures (from -269 °C to +400 °C) and to wear.

As a particular and exemplary application of the device 1, an emergency lighting appliance comprises a box-like body, an electric circuit 8 associated with a respective battery 3 and with a mains electricity supply, a light source and a screen 9, and further comprises a device 1 which is provided with at least one flexible sheet 2, which is designed to cover the outer surface of the battery 3.

The sheet 2 comprises at least one layer 4 which is constituted at least partially by a material that has a predefined value of electrical resistivity.

Moreover the sheet 2 comprises at least one temperature adjustment unit 5, for the opening/closing of the electric power supply circuit of the layer 4.

In the closed configuration of the power supply circuit, the layer 4 is heated by the Joule effect with consequent heating of the battery 3.

The method for the management according to applicable statutory provisions of the powering of an emergency lighting appliance by way of batteries consists in measuring, instant by instant, the temperature of the battery 3 by way of at least one component of a device 1.

The device 1, as above mentioned, comprises at least one flexible sheet 2, which is designed to cover the outer surface of the battery 3.

In particular, the sheet 2 comprises at least one layer 4 which is constituted at least partially by a material that has a predefined value of electrical resistivity.

Moreover the sheet 2 comprises at least one temperature adjustment unit 5, for the opening/closing of the electric power supply circuit of the layer 4.

In the closed configuration of the power supply circuit, the layer 4 is heated by the Joule effect with consequent heating of the battery 3.

Once the battery 3 has reached a temperature lower than 8 °C, then, by way of the temperature adjustment unit 5, the electric power supply circuit of the layer 4 is closed.

Following such operation, monitoring of the temperature of the battery 3 continues instant by instant, by way of the temperature adjustment unit 5.

In the instant when the battery 3 has reached a temperature higher than 12 °C by way of the temperature adjustment unit 5, the electric power supply circuit of the layer 4 is opened.

Advantageously, the device 1 for batteries, storage batteries, cells and the like, particularly for emergency lighting appliances, enables the management according to applicable statutory provisions of batteries for powering emergency lighting appliances.

In fact, such standards establish that the operating temperature of the batteries installed in an emergency light must necessarily be comprised between 0°C and +50°C, a range that is maintained through the use of the device 1 according to the invention.

Conveniently, the device 1 for batteries, storage batteries, cells and the like, particularly for lighting appliances, enable the control of the operating temperature of the battery 3.

Positively, the device 1, according to the invention, is adapted to homogeneously heat the battery 3, thus preventing the risk of partial or complete freezing of the cells of the battery 3.

In practice it has been found that the the device 1 for batteries, storage batteries, cells and the like, particularly for emergency lighting appliances, fully achieves the intended aim in that it enables the management according to applicable statutory provisions of batteries for powering emergency lighting appliances.

The invention, thus conceived, is susceptible of numerous modifications and variations, all of which are within the scope of the appended claims.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An emergency lighting appliance of the type comprising a box-like body, an electrical circuit (8) associated with a respective battery (3) and with a mains electricity supply, a light source, and a screen (9), **characterized in that** it further comprises a device for batteries, storage batteries, cells and the like which comprises at least one flexible sheet (2), is covering the outer surface of a battery (3), said sheet (2) comprising at least one layer (4) which is constituted at least partially by a material that has a predefined value of electrical resistivity, and at least one temperature adjustment unit (5) arranged on the outer surface of said sheet (2), for opening/closing the mains electric power supply circuit of said at least one layer (4), in the closed configuration of said power supply circuit, said at least one layer (4) being heated by the Joule effect with consequent heating of the battery (3).

2. The emergency lighting appliance according to claim 1, **characterized in that** said device (1) comprises at least two mutually coupled sheets (2a, 2b), said sheets (2a, 2b) being provided with a respective layer (4a, 4b), the presence of said two sheets (2a, 2b) ensuring a higher quantity of total heat generated and transmitted to the battery (3).

3. The emergency lighting appliance according to claim 1, **characterized in that** said sheet (2) is provided with at least one pair of electrical cables (6a, 6b), one (6a) arranged between said sheet (2) and the mains voltage, and the other (6b) connected to the temperature adjustment unit (5).

4. The emergency lighting appliance according to claim 1, **characterized in that** said temperature adjustment unit (5) is of the type selected from among an electric thermostat, an electronic thermostat and the like.

5. The emergency lighting appliance according to one or more of the preceding claims, **characterized in that** said sheet (2) is provided, in one of its portions, with a coating (7) of adhesive material in order to stably fix said sheet (2) to said battery (3).

6. The emergency lighting appliance according to one or more of the preceding claims, **characterized in that** said layer (4) is of the type selected from the group consisting of a metal, a polymer with the addition of electrically conducting materials, and the like.

7. The emergency lighting appliance according to one or more of the preceding claims, **characterized in that** said at least one sheet (2) is made of a material selected from the group consisting of polymeric materials, composite materials and the like.

8. A method for the management, according to applicable statutory provisions, of the powering of an emergency lighting appliance by way of batteries, comprising the steps of:
- measuring, instant by instant, the temperature of a battery (3) by way of at least one component of a device (1) for batteries, storage batteries, cells and the like that comprises at least one flexible sheet (2), covering the outer surface of said battery (3), said at least one flexible sheet (2) comprising at least one layer (4) constituted at least partially by a material that has a predefined value of electrical resistivity, and at least one temperature adjustment unit (5) arranged on the outer surface of said sheet (2), for the opening/closing of the mains electric power supply circuit of said at least one layer (4), in the closed configuration of said power supply circuit, said at least one layer (4) being heated by the Joule effect with consequent heating of said battery (3);
- closing, by way of said temperature adjustment unit (5), said electric power supply circuit of said at least one layer (4) when said battery (3) reaches a temperature that is lower than 8°C;
- monitoring, instant by instant, through said temperature adjustment unit (5) of said device, the temperature of said battery (3);
- opening, by way of said temperature adjustment unit (5), said electric power supply circuit when said battery (3) reaches a temperature that exceeds 12°C.

## Patentansprüche

1. Eine Notbeleuchtungsvorrichtung von der Art, die einen kastenartigen Körper umfasst, einen elektrischen Schaltkreis (8), der mit einer entsprechenden Batterie (3) und mit einer Netzstromversorgung verbunden ist, eine Lichtquelle und ein Display (9), **dadurch gekennzeichnet, dass** sie weiter eine Vorrichtung für Batterien, Speicherbatterien, Zellen und dergleichen umfasst, die mindestens eine biegsame Schicht (2) umfasst und die äußere Oberfläche einer Batterie (3) bedeckt, wobei die Schicht (2) mindestens eine Lage (4) umfasst, welche zumindest teilweise aus einem Material besteht, das einen vordefinierten Wert eines elektrischen Widerstands hat, und mindestens eine Temperatureinstelleinheit (5), angebracht an der äußeren Oberfläche der Schicht (2), zum Öffnen/Schließen des elektrischen Netzstromversorgungs-Schaltkreises der mindestens einen Schicht (4), wobei in der geschlossenen Konfiguration des Stromversorgungsschaltkreises die mindestens eine Lage (4) durch den Joule-Effekt erhitzt wird, mit daraus folgender Aufheizung der Batterie (3).

2. Die Notbeleuchtungsvorrichtung gemäß Anspruch 1, **dadurch gekennzeichnet, dass** die Vorrichtung (1) mindestens zwei miteinander gekoppelte Schichten (2a, 2b) umfasst, wobei die Schichten (2a, 2b) mit einer entsprechenden Lage (4a, 4b) ausgestattet sind und die Anwesenheit der beiden Schichten (2a, 2b) eine größere Menge an Gesamtwärme sicherstellt, die erzeugt und an die Batterie (3) übertragen wird.

3. Die Notbeleuchtungsvorrichtung gemäß Anspruch 1, **dadurch gekennzeichnet, dass** die Schicht (2) mit mindestens einem Paar von Stromkabeln (6a, 6b) ausgestattet ist, eins (6a) angeordnet zwischen der Schicht (2) und der Netzspannung und das andere (6b) verbunden mit der Temperatureinstelleinheit (5).

4. Die Notbeleuchtungsvorrichtung gemäß Anspruch 1, **dadurch gekennzeichnet, dass** die Temperatufeinstelleinheit (5) von der Art ist, die gewählt ist aus einem elektrischen Thermostat, einem elektronischen Thermostat und dergleichen.

5. Die Notbeleuchtungsvorrichtung gemäß einem oder mehreren der obigen Ansprüche, **dadurch gekennzeichnet, dass** die Schicht (2) in einem ihrer Abschnitte mit einer Beschichtung (7) aus haftendem Material versehen ist, zur stabilen Befestigung der Schicht (2) an der Batterie (3).

6. Die Notbeleuchtungsvorrichtung gemäß einem oder mehreren der obigen Ansprüche, **dadurch gekennzeichnet, dass** die Lage (4) von der Art ist, die gewählt ist aus der Gruppe bestehend aus einem Metall, einem Polymer unter Hinzufügung von elektrisch leitenden Materialien und dergleichen.

7. Die Notbeleuchtungsvorrichtung gemäß einem oder mehreren der obigen Ansprüche, **dadurch gekennzeichnet, dass** die mindestens eine Schicht (2) aus einem Material besteht, das gewählt ist aus der Gruppe bestehend aus Polymermaterialien, Verbundmaterialien und dergleichen.

8. Ein Verfahren zum Verwalten, gemäß anwendbaren Rechtsvorschriften, der Stromversorgung einer Notbeleuchtungsvorrichtung mit Hilfe von Batterien, das folgende Schritte umfasst:
- Messen der Temperatur einer Batterie (3) Schritt für Schritt mit Hilfe mindestens einer Komponente einer Vorrichtung (1) für Batterien, Speicherbatterien, Zellen und dergleichen, die mindestens eine biegsame Schicht (2) umfasst, welche die äußere Oberfläche der Batterie (3) bedeckt, wobei die mindestens eine biegsame Schicht (2) mindestens eine Lage (4) umfasst, welche zumindest teilweise aus einem Material besteht, das einen vordefinierten Wert eines elektrischen Widerstands hat, und mindestens eine Temperatureinstelleinheit (5) hat, die an der äußeren Oberfläche der Schicht (2) angeordnet ist, zum Öffnen/Schließen des elektrischen Netzstromversorgungs-Schaltkreises der mindestens einen Lage (4), wobei in der geschlossenen Konfiguration des Stromversorgungsschaltkreises die mindestens eine Lage (4) durch den Joule-Effekt erhitzt wird, mit daraus folgender Aufheizung der Batterie (3),
- Schließen, mit Hilfe der Temperatureinstelleinheit (5), des elektrischen Stromversorgungsschaltkreises der mindestens einen Lage (4), wenn die Batterie (3) eine Temperatur erreicht, die niedriger ist als 8°C,
- Überwachen, Schritt für Schritt, der Temperatur der Batterie (3) durch die Temperatureinstelleinheit (5) der Vorrichtung,
- Öffnen, mit Hilfe der Temperatureinstelleinheit (5), des elektrischen Stromversorgungsschaltkreises, wenn die Batterie (3) eine Temperatur erreicht, die 12°C überschreitet.

## Revendications

1. Appareil d'éclairage d'urgence du type comportant un corps en forme de boîtier, un circuit électrique (8) associé à une batterie respective (3) et à une alimentation électrique sur secteur, une source de lumière et un écran (9), **caractérisé en ce qu'**il comporte en outre un dispositif pour batteries, accumulateurs, piles et autres qui comprend au moins une feuille souple (2) couvrant la surface extérieure d'une batterie (3), ladite feuille (2) comprenant au moins une couche (4) constituée au moins partiellement par une matière à résistivité électrique d'une valeur prédéfinie, et au moins un système de réglage de température (5) disposé sur la surface extérieure de ladite feuille (2), pour ouvrir/fermer le circuit d'alimentation électrique sur secteur de ladite au moins une couche (4), dans la configuration fermée dudit circuit d'alimentation électrique, ladite au moins une couche (4) étant chauffée par effet Joule, ce qui fait donc chauffer la batterie (3).

2. Appareil d'éclairage d'urgence selon la revendication 1, l'appareil (1) étant **caractérisé en ce qu'**il comporte au moins deux feuilles (2a, 2b) assemblées l'une avec l'autre, lesdites feuilles (2a, 2b) étant munies d'une couche respective (4a, 4b), la présence desdites deux feuilles (2a, 2b) assurant la production d'une plus grande quantité de chaleur totale transmise à la batterie (3).

3. Appareil d'éclairage d'urgence selon la revendication 1, **caractérisé en ce que** ladite feuille (2) est munie d'au moins une paire de câbles électriques (6a, 6b), un premier (6a) étant disposé entre ladite feuille (2) et la tension du secteur, et l'autre (6b) étant connecté au système de réglage de température (5).

4. Appareil d'éclairage d'urgence selon la revendication 1, **caractérisé en ce que** ledit système de réglage de température (5) est du type choisi parmi un thermostat électrique, un thermostat électronique et autres.

5. Appareil d'éclairage d'urgence selon une ou plusieurs des revendications précédentes, **caractérisé en ce que** ladite feuille (2) est munie, sur une de ses parties, d'un revêtement (7) en matière adhésive servant à fixer ladite feuille (2) d'une manière stable à ladite batterie (3).

6. Appareil d'éclairage d'urgence selon une ou plusieurs des revendications précédentes, **caractérisé en ce que** ladite couche (4) est du type choisi parmi le groupe constitué par un métal, un polymère avec un apport de matériaux électriquement conducteurs et autres.

7. Appareil d'éclairage d'urgence selon une ou plusieurs des revendications précédentes, **caractérisé en ce que** ladite au moins une feuille (2) est en matière choisie parmi le groupe constitué par les polymères, les composites et autres.

8. Procédé pour la gestion, conformément aux dispositions réglementaires en vigueur, de l'alimentation électrique d'un appareil d'éclairage d'urgence à l'aide de batteries, comportant les étapes consistant à :
- mesurer, instant par instant, la température d'une batterie (3) à l'aide d'au moins un élément d'un dispositif (1) pour batteries, accumulateurs et autres qui comprend au moins une feuille souple (2) couvrant la surface extérieure de ladite batterie (3), ladite au moins une feuille (2) comprenant au moins une couche (4) constituée au moins partiellement par une matière à résistivité électrique d'une valeur prédéfinie, et au moins un système de réglage de température (5) disposé sur la surface extérieure de ladite feuille (2), pour ouvrir/fermer le circuit d'alimentation électrique sur secteur de ladite au moins une couche (4), dans la configuration fermée dudit circuit d'alimentation électrique, ladite au moins une couche (4) étant chauffée par effet Joule, ce qui fait donc chauffer la batterie (3) ;
- fermer, à l'aide dudit système de réglage de température (5), ledit circuit d'alimentation électrique de ladite au moins une couche (4) lorsque ladite batterie (3) atteint une température inférieure à une valeur de 8°C ;
- contrôler, instant par instant, à l'aide dudit système de réglage de température (5) dudit dispositif, la température de ladite batterie (3);
- ouvrir, à l'aide dudit système de réglage de température (5), ledit circuit d'alimentation électrique lorsque ladite batterie (3) atteint une température supérieure à 12°C.
